# EUROPEAN PATENT SPECIFICATION

(11) **EP 2 333 024 B1**
(45) Date of publication and mention of the grant of the patent: **13.08.2014**
(21) Application number: 10193991.6
(22) Date of filing: 07.12.2010
(51) Int. Cl.: C09D 11/10, C09D 11/00, C09D 11/02

(54) **Electrically conductive emulsion ink and method for producing electrically conductive thin film using the same**
Elektrisch leitfähige Emulsionstinte und Verfahren zur Herstellung eines elektrisch leitfähigen Dünnfilms damit
Encre d'émulsion conductrice électrique et procédé de production de film mince conducteur électrique l'utilisant

(30) Priority: 10.12.2009 JP 2009280089
(43) Date of publication of application: 15.06.2011
(73) Proprietor: Riso Kagaku Corporation, Tokyo 108-8385 (JP)
(72) Inventor: Ohashi, Kazunori, Tokyo Tokyo 108-8385 (JP); Ogawa, Hiroyuki, Tokyo Tokyo 108-8385 (JP); Aoki, Satoshi, Tokyo 108-8385 (JP)
(74) Representative: Kotitschke & Heurung Partnerschaft mbB

(56) References cited:
- WO-A1-03/106573
- WO-A1-2006/130980
- US-A1- 2004 144 959
- US-A1- 2007 144 305

## Description

### TECHNICAL FIELD

The present invention relates to a metal nanoparticle-containing ink which can form an electrically conductive thin film such as a wiring pattern on a surface of a substrate easily in a short time.

### BACKGROUND ART

At present, vacuum process and photolithography have been mainly used in the process for producing a wiring pattern of electronic devices such as semi-conductors, circuit substrates, liquid crystal displays and thin film solar cells,. Photolithography is a patterning technique which produces a required wiring pattern by coating a photosensitive substance on a surface of a substrate, and exposing it to light by irradiation with ultraviolet ray.

Under the circumstances, a great interest has been recently put on a technique for producing an electronic device by a solution process such as printing and coating (printable electronics), and research and development have been widely conducted. The use of the solution process would realize "vacuum free process", "high temperature free process" and "photolithography free process" and give an advantage of remarkable improvement of productivity. As methods for producing a wiring pattern by printing, methods utilizing screen printing and inkjet printing have been proposed, and some of them have been commercialized.

However, when a wiring pattern is produced by printing, electrically conductive fillers contained in an ink must be fused with each other to exhibit electrical conductivity. For this purpose, the electrically conductive ink was printed to form a wiring pattern, and then was calcined at high temperature, conventionally. However, since such calcination at high temperature requires a large amount of energy consumption, reduction of environmental impact or costs has been demanded. Also, since there is a demand for forming a wiring pattern on a polymer substrate such as of PET and PP having little heat resistance or a glass substrate equipped with TFT (thin film transistor), lowering of calcination temperature is desired.

Patent Document 1 discloses a method in which a substrate is surface-treated with a surface treatment solution containing an alkaline metal compound, and then an electrically conductive ink containing metal nanoparticles is coated on the substrate, followed by calcinations of the electrically conductive ink in a reducing atmosphere. However, since acetic acid, formic acid, hydrochloric acid or the like is required for the reducing atmosphere, the substrate must have acid resistance, and thus choice of the substrate is limited.

Patent Document 2 discloses a method in which a layer of metal fine particles is printed on a substrate, and then the layer is treated with an acidic solution for a short time so as to allow the layer to exhibit an electrical conductivity. However, since the substrate must be immersed in the acidic solution, the substrate must have acid resistance, and thus choice of the substrate is limited.

Patent Document 3 discloses a method for producing a wiring substrate, which comprises a step of forming a pattern as a wiring precursor on a substrate using a metal nanoparticle paste, a step of allowing a polar solvent or polar solvent solution containing a solubilizer to act on the pattern of the substrate and a step of drying the substrate followed by calcination of the metal nanoparticles to form a wiring. However, it is problematic in that the solvent takes a long time of about 2 hours to act on the pattern on the substrate. Also, since the substrate must be immersed in the polar solvent or polar solvent solution containing a solubilizer, the substrate must have solvent resistance, and thus choice of the substrate is limited.

Patent document 4 discloses a method in which a wiring is formed by printing with an electrically conductive ink which is composed of a metallic source substantially as a metal salt, an anti-oxidizing agent and a reducing agent. However, it requires calcination at 150°C, and further decrease in reducing temperature is required. Also, there is a concern about storage stability because a metal salt and a reducing agent coexist in the electrically conductive ink.

Patent Document 5 discloses a method in which electrical conductivity is exhibited by providing a substrate with metal nanoparticles which are dispersed in water or an organic solvent, and then allowing a reducing substance to act thereon. Immersing operation is disclosed as a method for allowing a reducing substance to act thereon, but it is problematic in that process steps are increased, operation becomes complicated and productivity is lowered. Also, a method in which the substrate is previously surface-treated with a reducing substance, and then metal nanoparticles are provided on the substrate is disclosed, but the same problems as above arise, and choice of the substrate is limited.
Patent Document 1: JP-A-2006-287217
Patent Document 2: JP-A-2006-313891
Patent Document 3: JP-A-2008-72052
Patent Document 4: JP-A-2008-166590
Patent Document 5: JP-A-2008-235224

WO03/106573 A1 relates to a method for the production of conductive and transparent nano-coatings and nano-inks and discloses a W/O emulsion ink containing nano-metal powders in the oil phase thereof.

US 2007/144305 A1 discloses compositions comprising metallic nanopartices suitable for use in cohesive, highly conductive structures on substrates. In particular, US 2007/144305 A1 deals with a dispersion of metal nanoparticles in an aqueous medium.

WO2006/130980 A1 discloses an aqueous printable electrical conductor in form of a dispersion comprising metal powder dispersed into an aqueous acrylic, styrene/acrylic, urethane/acrylic, natural polymers vehicle. WO2006/130980 A1 teaches the use of UV light to increase the electrical conductivity of the sintered prints of nano-metal inks.

US 2004/144959 A1 relates to conductive ink compositions including a reactive organic medium, a metal powder and an additive which reduces the curing temperatures of the conductive ink. As an additive, US 2004/144959 A1 discloses polymer type additives.

### DISCLOSURE OF THE INVENTION

### PROBLEMS TO BE SOLVED BY THE INVENTION

The object of the present invention is to make it possible to form an electrically conductive thin film made of metal nanoparticles at a relatively low temperature of less than 100°C or room temperature in a short time with simple procedures.

### MEANS FOR SOLVING THE PROBLEM

According to the present invention, the object can be achieved by emulsification of an oil phase containing metal nanoparticles with a water phase containing a reducing agent for the metal nanoparticles or a photocatalyst to form a one-pack type electrically conductive emulsion ink.

That is, according to one aspect of the present invention, there is provided an electrically conductive emulsion ink as defined in claim 1 comprising an oil phase containing metal nanoparticles and a water phase containing a reducing agent for the metal nanoparticles and/or a photocatalyst.

In addition, according to another aspect of the present invention, there is provided a method for forming an electrically conductive thin film, which comprises a step of coating or patterning the above electrically conductive emulsion ink that contains a reducing agent, and a step of subjecting the coated or patterned electrically conductive emulsion ink to heat treatment.

Further, according to still another aspect of the present invention, there is provided a method for forming an electrically conductive thin film, which comprises a step of coating or patterning the above electrically conductive emulsion ink that contains a photocatalyst, and a step of subjecting the coated or patterned electrically conductive emulsion ink to ultraviolet irradiation.

### EFFECTS OF THE INVENTION

The electrically conductive emulsion ink of the present invention comprises metal nanoparticles in an oil phase and a reducing agent for the metal nanoparticles and/or a photocatalyst in a water phase. Thus, prior to use, the metal nanoparticles and the reducing agent or photocatalyst are isolated from each other in separate phases so as to cause no reaction, and storage stability is maintained well.

In addition, when the electrically conductive emulsion ink of the present invention contains a reducing agent, the emulsion is collapsed after it has been transferred onto a substrate, so that the metal nanoparticles come into contact with the reducing agent and fused with each other by the action of the reducing agent at a relatively low temperature of less than 100°C, thereby exhibiting electrical conductivity.

Also, when the electrically conductive emulsion ink of the present invention contains a photocatalyst, the emulsion is collapsed after it has been transferred onto a substrate, so that the metal nanoparticles come into contact with the photocatalyst and fused with each other by the action of the photocatalyst even under room temperature upon exposure to ultraviolet irradiation, thereby exhibiting electrical conductivity.

Therefore, an electrically conductive thin film can be formed onto various substrates in a short time with simple procedures by coating or patterning the electrically conductive emulsion ink of the present invention on a substrate, and then maintaining it at a relatively low temperature of less than 100°C or exposing it to ultraviolet irradiation.

### MODE FOR CARRYING OUT THE INVENTION

Hereinafter, the electrically conductive emulsion ink of the present invention will be described in detail by way of modes for carrying out the invention.

### 1. Electrically conductive emulsion ink

The electrically conductive emulsion ink of the present invention comprises an oil phase containing metal nanoparticles and a water phase containing a reducing agent for the metal nanoparticles and/or a photocatalyst. The emulsion form of the ink may be W/O type where the outer phase is the oil phase or O/W type where the outer phase is the water phase, or may be a three-phase emulsion of O/W/O type or W/O/W type.

### 2. Oil phase

The oil phase of the electrically conductive emulsion ink of the present invention can be prepared by dispersing at least metal nanoparticles in a dispersion medium.

### 2-1. Dispersion media

As the dispersion medium, can used a non-aqueous solvent generally used in an ink and the like. Concrete examples of the non-aqueous solvent include mineral oils such as naphthenic, paraffinic and isoparaffinic oils, vegetable oils such as soybean oil, corn oil, sunflower oil, canola oil, safflower oil, grape seed oil, sesame oil, castor oil, camellia oil, olive oil, coconut oil and palm oil, fatty acids such as isopalmitic acid, oleic acid and isostearic acid, esters such as methyl laurate, isopropyl laurate, isopropy myristrate, isopropyl palmitate, isostearyl palmitate, methyl oleate, ethyl oleate, isopropyl oleate, butyl oleate, methyl linoleate, isobutyl linoleate, ethyl linoleate, isopropyl isosterate, soybean oil methyl ester, soybean oil isobutyl ester, tall oil methyl ester, tall oil isobutyl ester, diisopropyl adipate, diisopropyl sebacate, diethyl sebacate, propylene glycol monocaprate, trimethylolpropane tri-2-ethylhexanoate and glyceryl tri-2-ethylhexanoate, alcohols such as isopalmityl alcohol, isostearyl alcohol and oleyl alcohol, and hydrocarbons such as hexane, octane, cyclohexane, toluene and xylene. These solvents can be used alone or in combination of two or more.

### 2-2. Metal nanoparticles

Metal nanoparticles are nano-sized metallic fine particles that are coated with a protecting agent on the surface thereof so as to be dispersed independently and stably. Examples of metals used for metal nanoparticles include known ones such as silver, copper, gold, palladium, nickel and rhodium. Also, an alloy composed of at least two of these and an alloy composed of at least one of these with iron can be used. Examples of the former alloy include platinum-gold alloy, platinum-palladium alloy, gold-silver alloy, silver-palladium alloy, palladium-gold alloy, platinum-gold alloy, rhodium-palladium alloy, silver-rhodium alloy, copper-palladium alloy and nickel-palladium alloy. Also, examples of the latter alloy with iron include iron-platinum alloy, iron-platinum-copper alloy, iron-platinum-tin alloy, iron-platinum-bismuth alloy and iron-platinum-lead alloy. These metal or alloy can be used alone or in combination of two or more.

Average particle diameter of metal nanoparticles is usually within 1-100 nm, and preferably 1-50 nm and more preferably 1-10 nm. When the average particle diameter of the metal nanoparticles is over 100 nm, fusion between particles resulting from depression of melting point becomes difficult to occur, and also electrical conductivity of the resulting thin film is lowered.

Addition amount of the metal nanoparticles is preferably 30-50 mass% relative to the total amount of the oil phase. Also, the addition amount of the metal nanoparticles is preferably 5-20 mass% relative to the total amount of the ink.

The protecting agents for metal nanoparticles include those composed of one or more selected from the group consisting of heterocycles and alkyl-substituted heterocycles; and alkanes, alkenes, alkynes, aromatic hydrocarbons, alkyl-substituted aromatic hydrocarbons, heterocycles and alkyl-substituted heterocycles, which contain one or more selected from the group consisting of -COOH, -SH, -SOH, -SO₂H, -SO₃H, -NH₂, -NOH, -NO₂H, -OH, - SiOH, -Si(OH)₂, -Si(OH)₃, -PO₂H₂, -PO₃H₂, -PO₄H, -COO-, - CON-, -CONH-, -CONH₂, -S-, -SO-, -SO₂-, -NH-, -NO-, -O-, -SiO-, -PH-, -PH₂-, -PO-, -POH-, -POH₂-, -PO₂-, -PO₂H-, - PO₃-, -PO₃H-, -PO₄-, -N (-) -, -Si (O-)₂, and -Si (O-)₃.

Among these protecting agents, it is preferable to use a protecting agent having a straight or branched alkyl chain with 10-20 carbon atoms, particularly a fatty acid or an aliphatic amine, thiol or alcohol. The number of carbon atoms is limited as above because when it is less than 10, storage stability of the metal nanoparticles is not maintained and when it is more than 20, good electrical conductivity is difficult to obtain.

The fatty acid can be any of saturated fatty acids and unsaturated fatty acids, and include, for example, decanoic acid, undecanoic acid, dodecanoic acid, tetradecanoic acid, hexadecanoic acid, octadecanoic acid, eicosanoic acid, docosanoic acid, 2-ethylhexanoic acid, oleic acid, linoleic acid, linolenic acid, decenoic acid, undecenoic acid, dodecenoic acid, tridecenoic acid, tetradecenoic acid, pentadecenoic acid, hexadecenoic acid, heptadecenoic acid, oleic acid, and elaidinic acid. These can be used alone or in combination of two or more.

In addition, the aliphatic amine includes decylamine, undecylamine, dodecylamine, tetradecylamine, pentadecylamine, hexadecylamine, heptadecylamine, octadecylamine, nonadecylamine, decenylamine, undecenylamine, dodecenylamine, tridecenylamine, tetradecenylamine, pentadecenylamine, hexadecenylamine, heptadecenylamine, octadecenylamine, nonadecenylamine, oleylamine, icocenylamine, nonacocenylamine, dipentylamine, dihexylamine, dodecyldimethylamine, N,N-dimethyloctylamine, naphthalenediamine, octamethylenediamine and nonanediamine. These can be used alone or in combination of two or more.

Further, the aliphatic thiol includes decanethiol, undecanethiol, dodecanethiol, tridecanethiol, tetradecanethiol, pentadecanethiol, hexadecanethiol, heptadecanethiol, octadecanethiol,nonadecanethiol, eicosanethiol, decenethiol, undecenethiol, dodecenethiol, tridecenethiol, tetradecenethiol, pentadecenethiol, hexadecenethiol, heptadecenethiol, octadecenethiol, nonadecenethiol, eicosenethiol and nonacosenethiol. These can be used alone or in combination of two or more.

Moreover, the aliphatic alcohol includes decanol, undecanol, dodecanol, tridecanol, pentadecanol, hexadecanol, heptadecanol, octadecanol, nonadecanol and eicosanol. These can be used alone or in combination of two or more.

As a production method of metal nanoparticles, conventionally known methods such as gas-evaporation method, sputtering method, metal vapor synthesis method, colloidal method, alkoxide method, coprecipitation method, homogeneous precipitation method, pyrolysis method, chemical reduction method, amine reduction method and solvent evaporation method can be used. These possess respective characteristics, and chemical reduction method and amine reduction method are preferably used particularly for the purpose of mass production. For practicing these production methods, a protecting agent selected from the above described ones may be optionally used, or a known reducing agent or the like may be appropriately used.

### 2-3. Other components in the oil phase

In addition to the above mentioned metal nanoparticles and dispersing agent, the oil phase can contain a binder component for improving adhesiveness between the substrate and the nanoparticles, and other known components such as antioxidants, viscosity modifiers and corrosion inhibitors, to an extent that does not impair the effect of the present invention. The binder component differs depending upon the substrate to be used (described later) and cannot be generally specified, but includes, for example, known resins such as acrylic resins, urethane resins, epoxy resins, phenol resins and butyral resins.

### 2-4. Preparation method of the oil phase

The oil phase can be prepared by dispersing the metal nanoparticles in the dispersion medium, and if required, dispersing or dissolving another component mentioned above. Dispersion or dissolution can be conducted using a known ultrasonic dispersing machine, kneader or homogenizer. The ultrasonic dispersing machine can be used in combination with another kneader or the like.

### 3. Water phrase

The water phase of the electrically conductive emulsion ink of the present invention can be prepared by dispersing or dissolving at least a reducing agent and/or a photocatalyst in an aqueous medium.

### 3-1. Reducing agent

The reducing agent includes agents which are generally used so far, including sodium borohydride, sodium hypochlorite, ascorbic acid, ascorbates, derivatives of ascorbic acid, citric acid, citrates, tartaric acid, tartrates, malic acid, hydrazine compounds, thiourea dioxide, sulfoxylates, formic acid, formaldehyde and tocopherols. Considering safety upon use of the reducing agent, it is preferable to use a reducing agent that may be contained in food, including ascorbic acid, ascorbates, citric acid, citrates, malic acid and tocopherols.

Concentration of the reducing agent in the water phase differs depending upon kinds of the reducing agent, and thus cannot be generally specified but is usually 0.001-1 mol/l and preferably 0.005-0.5 mol/l. When the concentration is less than 0.001 mol/l, the time required for reduction treatment becomes longer, and electrical conductivity of the resulting thin film is lowered. Also, when the concentration exceeds 1 mol/l, the coated film becomes ease to come off during the reduction treatment.

### 3-2. Photocatalysts

As the photocatalyst, a known photocatalyst such as titanium oxide, zinc oxide, tantalum oxide and fullerene is used.

Concentration of the photocatalyst in the water phase differs depending upon kinds of the photocatalyst, and thus cannot be generally specified but is usually 1-30 mass% and preferably 5-20 mass%. When the concentration is less than 1 mass%, the time required for ultraviolet irradiation becomes longer, and electrical conductivity of the resulting thin film is lowered. Also, when the concentration exceeds 20 mass%, the photocatalyst becomes ease to aggregate in the water phase.

### 3-3. Aqueous media

The aqueous medium can be constituted by water and optionally a water soluble organic solvent. Examples of the water soluble organic solvent include, for example, alkylene glycols such as ethylene glycol, diethylene glycol, triethylene glycol, tetraethylene glycol, pentaethylene glycol, propylene glycol, dipropylene glycol and tripropylene glycol; glycerin; acetins; glycol ethers such as triethylene glycol monomethylether, triethylene glycol monobuthylether, tetraethylene glycol monomethylether, tetraethylene glycol dimethylether, and tetraethylene glycol diethylether; triethanolamine; 1-methyl-2-pyrrolidone; β-thioglycol; and sulfolane. These water soluble organic solvents can be used alone or in combination of two or more.

Content of the water soluble organic solvent in the aqueous medium is preferably not more than 80%.

### 3-4. Other components in the water phase

In addition to the above components, the water phase can appropriately contain a humectant (moisturizer), a surface tension adjusting agent (surfactant), an antifoaming agent, a binder component, a pH controller, an antioxidant or an antiseptic agent to an extent that does not impair the effect of the present invention. The binder component includes those mentioned above concerning oil phase components. When a photocatalyst is used, a surfactant is preferably added to the water phase in order to sufficiently disperse the photocatalyst in the water phase.

### 3-5. Preparation method of the water phase

The water phase can be prepared by adding the reducing agent and/or the photocatalyst and optionally another above-mentioned component to the aqueous medium, and dispersing or dissolving with a conventional method. Also, an aqueous solution of a commercially available reducing agent or photocatalyst can be used as it is or after it is concentrated or diluted.

### 4. Formation of emulsion

The electrically conductive emulsion ink of the present invention can be prepared by mixing the oil phase, the water phase and an emulsifier, and emulsifying them with a known emulsifying machine.

As the emulsifying machine, a disper mixer, a homomixer, a high-pressure homogenizer, an ultrasonic dispersing machine and the like can be used.

Upon emulsification, the emulsifier may be previously added to at least one of the oil phase and the water phase, or added at the same time when the oil phase and the water phase are mixed.

As the emulsifier, mention may be made of anion surfactants such as metal soaps, higher alcohol sulfate esters, and sulfate esters of polyoxyethylene adducts; cation surfactants such as primary to tertiary amine salts, and quaternary ammonium salts; ether type nonionic surfactants such as polyoxyethylene ethers of higher alcohols, alkylphenol polyoxyethylene ethers and polyoxyethylene ethers of polyoxypropylene; ester type nonionic surfactants such as those composed of a polyhydric alcohol and a fatty acid including sorbitan fatty acid esters and polyglycerin fatty acid esters; ether ester type nonionic surfactants such as polyoxyethylene ethers of fatty acids, polyoxyethylene ethers of polyglycerin fatty acid esters, and polyoxyethylene ethers of caster oil; and nitrogen-containing type nonionic surfactants such as alkylolamides of fatty acids. These emulsifiers can be used alone or in combination of two or more. Generally, when a W/O type emulsion is formed, a surfactant with an HLB of 3-6 is used, and when an O/W type emulsion is formed, a surfactant with an HLB of 8-16 is used.

Addition amount of the emulsifier can be appropriately determined considering a molar concentration of a surfactant to be used, a surface area of the interface between the water phase and the oil phase, and a surface area of the interface between the oil phase and the solid substances such as pigments, and is usually 0.1-10 mass% and preferably 1-5 mass%.

Mass ratio of the oil phase and the water phase (oil phase/water phase) can be 1-99/99-1, and is preferably 10-90/90-10 and more preferably 30-70/70-30.

In order to improve electrical conductivity, it is preferable that at least one selected from the group consisting of polymer compounds, water-soluble organic solvents and ethylene carbonate is contained in the oil phase and/or water phase of the electrically conductive emulsion ink of the present invention.

Such polymer compounds include a rosin modified phenol resin (for example, HARIPHENOL KZ-115 (trade name; manufactured by Harima Chemicals, Inc.). Examples of other polymers that are preferably used include maleic acid resin, petroleum resin, xylene resin, rosin ester, polymer rosin ester, hydrogenated rosin ester, ketone resin, and cured resin, acrylic resin, rubber derivative, terpene resin or the like.

Such water-soluble organic solvents include those mentioned above concerning the aqueous medium of the water phase, carbonic ester such as propylene carbonate, and ethylene glycol, 1,2-pentanediol, 1,5-pentanediol, glycerin and other polyhydric alcohol solvents, and ethylene glycol monoethyl ether, diethylene glycol and other glycol ether solvents, and γ-butyrolactone and other lactone solvents are preferred.

### 5. Formation method of the electrically conductive thin film

When the electrically conductive emulsion ink of the present invention contains a reducing agent, an electrically conductive thin film can be formed by conducting a step of coating or patterning the ink on a surface of a proper substrate and a step of subjecting the coated or patterned ink to heat treatment.

In addition, when the electrically conductive emulsion ink of the present invention contains a photocatalyst, an electrically conductive thin film can be formed by conducting a step of coating or patterning the ink on a surface of a proper substrate and a step of subjecting the coated or patterned ink to ultraviolet irradiation.

Moreover, when the electrically conductive emulsion ink of the present invention contains both a reducing agent and a photocatalyst, either of the step of subjecting the coated or patterned ink to heat treatment and the step of subjecting the coated or patterned ink to ultraviolet irradiation may be conducted, or both of the steps may be conducted simultaneously or successively.

The method for forming an electrically conductive thin film according to the present invention can be applied to formation of wiring patterns as well as various thin film elements that can be formed in accordance with printable electronics.

### 5-1. Substrates

Substrates to which the electrically conductive emulsion ink of the present invention can be applied include, for example, conventionally known insulating substrates that have been used for formation of wiring patterns. The material for the insulating substrate may be any of organic and inorganic ones. As inorganic substrates, glass substrates, semi-conductor substrates such as of silicon and germanium and compound semi-conductor substrates such as of gallium-arsenide and indium-antimonide can be used, for example. These can be used alone or in combination of two or more. The inorganic substrate can be used after at least one layer of a thin film made of another material has been layered on the surface thereof. The another material in this case includes, for example, inorganic compounds such as silicon dioxide, fluorinated glass, phosphosilicate glass, boron-phosphosilicate glass, borosilicate glass, polycrystalline silicon, alumina, titania, zirconia, silicon nitride, titanium nitride, tantalum nitride, boron nitride, ITO (indium tin oxide), amorphous carbon, and fluorinated amorphous carbon.

In addition, examples of organic substrates include, for example, resinous molded articles such as polymer films and sheets, paper, woven fabrics and non-woven fabrics, which are made from materials such as polyethylene, polypropylene, polystyrene, vinyl chloride resin, polyamide, polyimide, polycarbonate, polyethyleneterephthalate (PET), vinylidene chloride resin, fluororesin and unsaturated polyester resin. These can be used alone or in combination of two or more in a form of a laminate, for example.

Moreover, the following treatment can be previously performed on a surface of the substrate in order to improve adhesiveness to the electrically conductive emulsion ink, if required. This treatment can be done on a surface of the substrate, for example, by physical means such as plasma treatment and electron beam treatment or chemical means such as coating of an adhesion improver. In this case, as the adhesion improver, can be used known agents that are used as so-called silane coupling agents or aluminum chelate compounds. A substrate such as paper may be provided with a liquid-absorbing layer in order to inhibit permeation of metal nanoparticles.

### 5-2. Coating or patterning step

The step of coating or patterning the electrically conductive emulsion ink on a surface of a substrate can be performed by using conventionally known coating methods such as bar coater, spray coat and spin coat and conventionally known printing methods such as screen printing, intaglio printing, letterpress printing, stencil printing and inkjet printing.

When the electrically conductive emulsion ink is transferred onto the surface of the substrate, the emulsion is collapsed so that the metal nanoparticles come into contact with the reducing agent and/or the photocatalyst, and the metal nanoparticles are fused with each other by the effect of the reducing agent at a relatively low temperature of less than 100°C or the effect of the photocatalyst under ultraviolet irradiation, thereby exhibiting electrical conductivity.

A mechanism by which electrical conductivity is exhibited as a result of the action of the reducing agent on metal nanoparticles has not yet been fully investigated, but it is assumed that the reducing agent acts to remove the protecting agent from metal nanoparticles, and also can reduce and remove an oxide film from the surface of metal nanoparticles.

A mechanism by which electrical conductivity is exhibited as a result of the action of the photocatalyst on metal nanoparticles has not yet been fully investigated, but it is assumed that the photocatalyst acts to decompose the protecting agent of metal nanoparticles.

### 5-3._Heat treatment step

When the electrically conductive emulsion ink of the present invention contains a reducing agent, a thin film further excellent in electrical conductivity can be formed by subjecting the electrically conductive emulsion ink which is coated or patterned in the above step to heat treatment.

The heat treatment is not particularly limited as long as it is conducted at room temperature or higher, but it is preferably conducted at a higher temperature to shorten the reaction time, and is usually conducted under a temperature condition of 40-100°C and preferably 60-80°C. When the temperature exceeds 100°C, it may become difficult to ensure safety during the reduction treatment. When the temperature is less than 40°C, the reduction rate may be lowered and treatment time may become longer.

### 5-4. Ultraviolet irradiation step

When the electrically conductive emulsion ink of the present invention contains a photocatalyst, a thin film further excellent in electrical conductivity can be formed by subjecting the electrically conductive emulsion ink which is coated or patterned in the above step to ultraviolet irradiation.

Ultraviolet irradiation can be performed, for example, using Handheld UV Lamp of UVGL-58 type by Hunakoshi Co., Ltd.

### EXAMPLE

Next, the electrically conductive emulsion ink of the present invention and the method for forming a thin film using the same will be described concretely by way of Example.

### PreparationExample

### (1) Preparation of silver nanoparticles

10 g of silver acetate was added to 250 ml of oleylamine, and was heated and dissolved therein at 60°C. Then, the mixture was heated at 200°C for 30 minutes under stirring. The mixture was left to stand still at room temperature, and then methanol was added to the resulting silver nanoparticle dispersion, and the produced silver nanoparticles were precipitated by a centrifuge and collected. A procedure of dissolving the resulting silver nanoparticles again in hexane and precipitating them in ethanol was repeated for purification. Average particle diameter of the resulting silver nanoparticles was visually measured to be about 10 nm by transmission electron microscopy (TEM).

### (2) Preparation of the oil phase

1.5 g of silver nanoparticles prepared in (1) above, 1.5 g of naphthenic non-aqueous medium (AF SOLVENT No. 4, manufactured by Nippon Oil Corporation) and 0.2 g of an emulsifier (HEXAGLYN 5-O, manufactured by Nikko Chemicals Co., Ltd.) were mixed together, and the mixture was treated with an ultrasonic dispersion machine to obtain an oil phase.

### (3) Preparation of emulsion ink

While the oil phase prepared in (2) above was ultrasonically dispersed, 6.87 g of a 0.05 mol/l aqueous ascorbic acid solution that was separately prepared was added thereto to obtain an emulsion ink.

### Example 1

The emulsion ink produced in the Preparation Example was coated on a glossy paper at a frequency shown in Table 1 with a bar coater. After coating, calcination treatment of the coated emulsion ink was conducted with an iron heated to about 70°C for a time period shown in Table 1. Thickness of the resulting coating was measured with 3D Laser Scanning Microscope VK8710 manufactured by KEYENCE CORPORATION, and volume resistivity of the same was measured with a 4-pin probe based resistivity meter LORESTA EP of MCP-T360 type manufactured by Mitsubishi Chemical Analytech Co., Ltd. Also, emulsion dispersing condition, aggregates of ink emulsion, and deformation of the paper substrate after calcination treatment were visually observed and evaluated. The results are shown in Table 1.

### Examples 2-4

An emulsion ink was prepared in the same manner as in the Preparation Example except that the composition was changed to that shown in Table 1, and the film thickness and volume resistivity were measured in the same manner as in Example 1. The results are shown in Table 1.

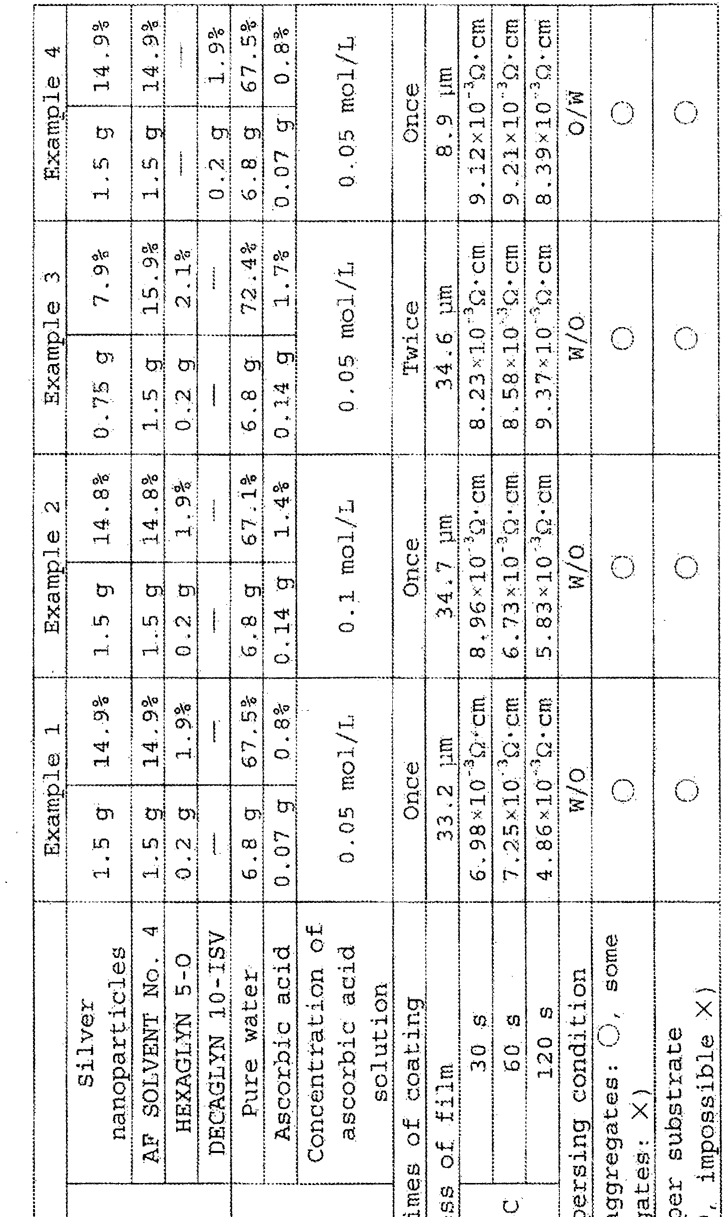

The raw materials shown in Table 1 mean as follows: AF SOLVENT No. 4 (trade name): a naphthenic non-aqueous medium available from Nippon Oil Corporation. HEXAGLYN 5-O (trade name): a surfactant, hexaglyceryl pentaoleate available from Nikko Chemicals Co., Ltd. DECAGLYN 10-ISV (trade name); a surfactant, decaglyceryl decaisostearate available from Nikko Chemicals Co., Ltd.

### Comparative Example 1

1.5 g of the metal nanoparticles produced in the Preparation Example and 0.5 g of toluene were mixed together to produce a metal nanoparticle dispersion with a solid content of 75%. The resulting metal nanoparticle dispersion was coated on a glossy paper with a bar coater, and immersed in a 0.05 mol/l aqueous ascorbic acid solution maintained at 70°C for 30-120 seconds to conduct reduction treatment. The thickness and volume resistivity of the resulting coating were measured in the same manner as in Example 1. Although electrical conductivity was exhibited, paper was swelled and deformed.

### Comparative Example 2

1.5 g of the metal nanoparticles produced in the Preparation Example and 1.5 g of naphthenic non-aqueous medium (AF SOLVENT No. 4 manufactured by Nippon Oil Corporation) were mixed together, and treated with an ultrasolnic dispersing machine to produce a metal nanoparticle dispersion. The resulting metal nanoparticle dispersion was examined in the same manner as in Comparative Example 1. No electrical conductivity was exhibited, and no volume resistivity could be measured.

### Comparative Example 3

An emulsion ink was prepared in the same manner as in the Preparation Example except that a purified water was used instead of the aqueous ascorbic acid solution as the water phase, and examined in the same manner as in Example 1. No electrical conductivity was exhibited, and no volume resistivity could be measured.

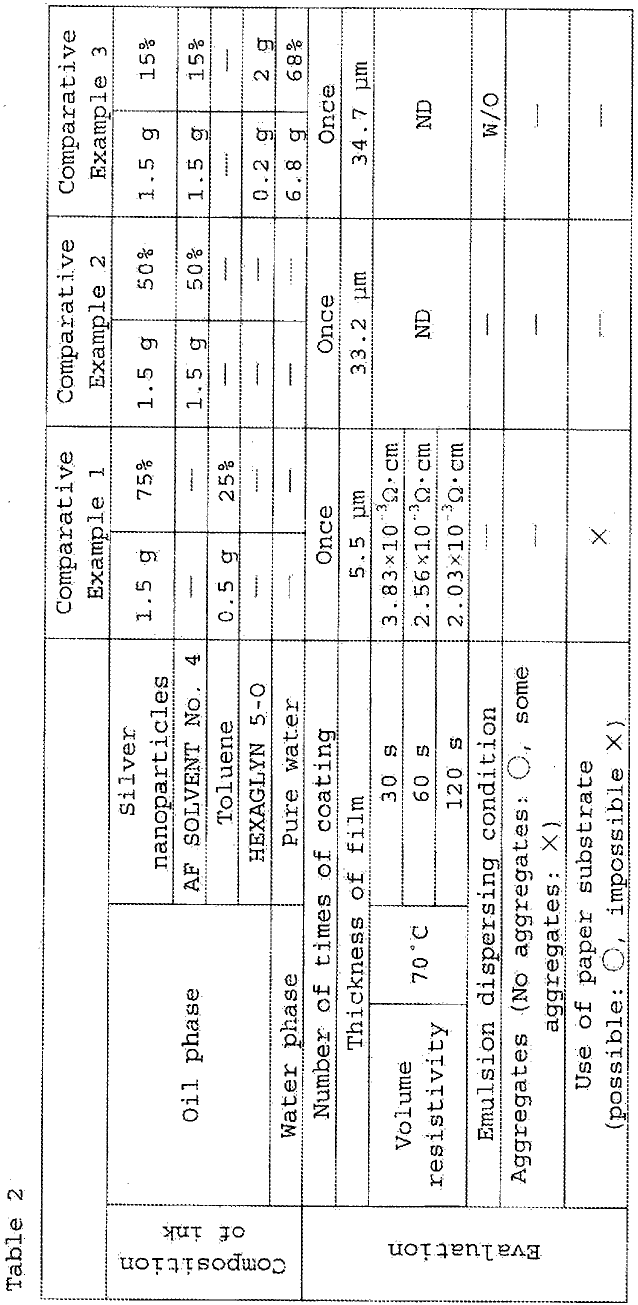

The raw materials shown in Table 2 were the same as in Table 1.

From the above, it is found that an electrically conductive thin film can be formed of the electrically conductive emulsion ink of the present invention in a short time with simple procedures by only coating a one-pack type electrically conductive emulsion ink on a surface of a substrate and heating it at a relatively low temperature.

### Examples 5-7

An emulsion ink was prepared in the same manner as in the Preparation Example except that the composition was changed to that shown in Table 3, and the film thickness and volume resistivity were measured in the same manner as in Example 1. The results are shown in Table 3.

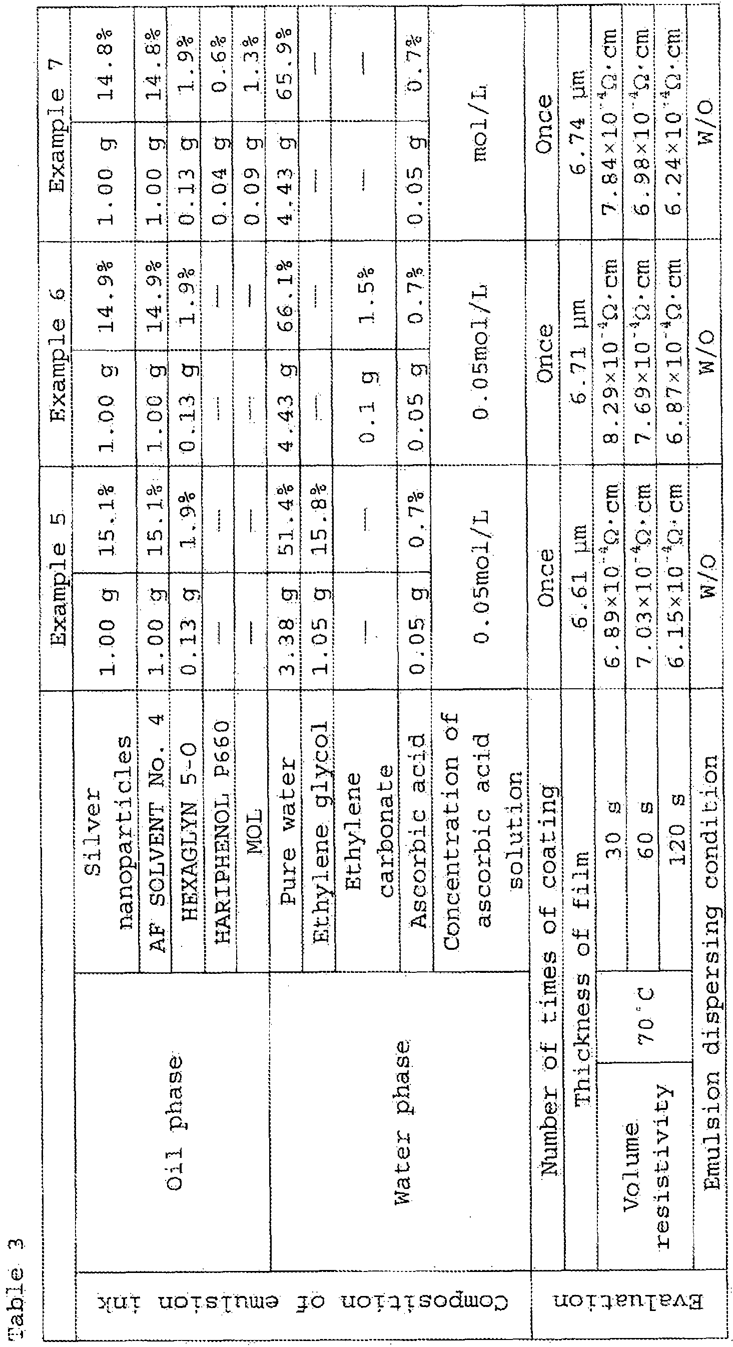

Meanwhile, details of the raw materials shown in Table 3 are the same as in Table 1 except for the following.
HARIPHENOL P660 (trade name): a rosin modified phenol resin available from Harima Chemicals, Inc. (average molecular weight = 50700).
MOL (trade name):Methyl oleat

From the results in Table 3, it is found that electrical conductivity of the thin film can be improved by allowing the present electrically conductive emulsion ink to contain a water-soluble solvent such as glycols, ethylene carbonate or a polymer compound such as a rosin modified phenol resin.

### Examples 8-10

An emulsion ink was prepared in the same manner as in the Preparation Example except that the composition was changed to that shown in Table 4. Then, the prepared emulsion ink was coated once on a glossy paper by a bar coater. Then, the coated emulsion ink was irradiated with ultraviolet light for 10 minutes using Handheld UV Lamp of UVGL-58 type by Hunakoshi Co., Ltd (integrated intensity = 1200 µW/cm²). Then, the film thickness and volume resistivity were measured in the same manner as in Example 1. The results are shown in Table 4.

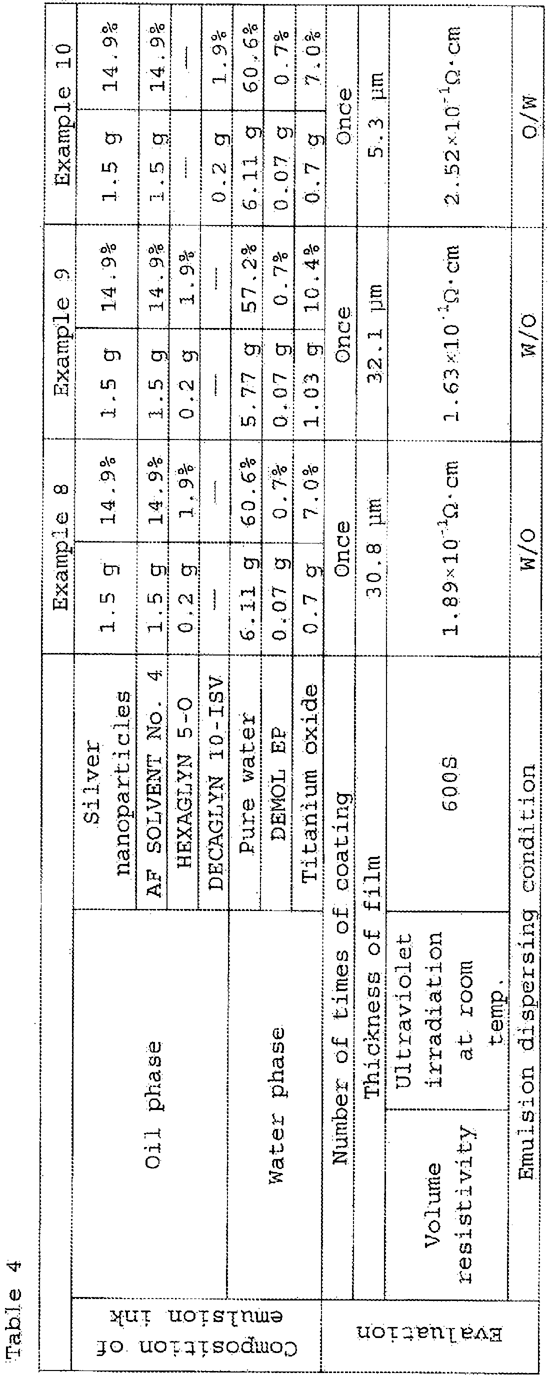

From the results shown in Table 4, it is found that the electrically conductive emulsion ink of the present invention which contains a photocatalyst can form an electrically conductive thin file even under room temperature in a short time with simple procedures by only ultraviolet irradiation.

### INDUSTRIAL APPLICABILITY

The electrically conductive emulsion ink of the present invention can be effectively applied to the printable electronics technique for forming a wiring pattern by a printing process.

## Claims

1. An electrically conductive emulsion ink comprising an oil phase containing metal nanoparticles and a water phase containing a reducing agent for the metal nanoparticles and/or a photocatalyst, wherein the reducing agent comprises at least one selected from the group consisting of sodium borohydride, sodium hypochlorite, ascorbic acid, ascorbates, derivatives of ascorbic acid, citric acid, citrates, tartaric acid, tartrates, malic acid, hydrazine compounds, thiourea dioxide, sulfoxylates formic acid, formaldehyde and tocopherols, and wherein the photocatalyst comprises at least one selected from the group consisting of titanium oxide, zinc oxide, tantalum oxide and fullerene.

2. The electrically conductive emulsion ink according to claim 1, wherein the oil phase comprises at least a non-aqueous dispersion medium and metal nanoparticles disperse in the dispersion medium, wherein the metal nanoparticles are those obtained by an amine reduction method and coated with a protecting agent having a linear or branched alkyl group with 10-20 carbon atoms.

3. The electrically conductive emulsion ink according to claim 1, wherein the reducing agent comprises at least one selected from the group consisting of sodium borohydride, sodium hypochlorite, ascorbic acid, ascorbates, citric acid, citrates, malic acid and hydrazine.

4. The electrically conductive emulsion ink according to claim 3, wherein the concentration of the reducing agent in the water phase is 0.001-1 mol/I.

5. The electrically conductive emulsion ink according to claim 1, wherein the photocatalyst comprises titanium oxide.

6. The electrically conductive emulsion ink according to any one claims 1-5, wherein the oil phase and/or the water phase comprise at least one selected from the group consisting of a polymer compound, a water-soluble solvent and ethylene carbonate.

7. A method of forming an electrically conductive thin film, which comprises a step of coating or pattering the electrically conductive emulsion ink that contains a reducing agent according to any one of claims 1-6, and a step of subjecting the coated or patterned electrically conductive emulsion ink to heat treatment.

8. The method of forming an electrically conductive thin film, according to claim 7, the heat treatment is conducted under a temperature of 40-100°C.

9. A method of forming an electrically conductive thin film, which comprises a step of coating or pattering the electrically conductive emulsion ink that contains a photocatalyst according to any one of claims 1-6, and a step of subjecting the coated or patterned electrically conductive emulsion ink to ultraviolet irradiation.

## Patentansprüche

1. Elektrisch leitende Emulsionsdruckfarbe, umfassend eine Ölphase, die Metallnanopartikel enthält, und eine Wasserphase, die ein Reduktionsmittel für die Metallnanopartikel und/oder einen Photokatalysator enthält, wobei das Reduktionsmittel mindestens einen Stoff aus der Gruppe umfasst, welche aus Natriumborhydrid, Natriumhypochlorit, Ascorbinsäure, Ascorbaten, Derivaten der Ascorbinsäure, Citronensäure, Citraten, Weinsäure, Äpfelsäure, Hydrazinverbindungen, Thioharnstoffdioxid, Sulfoxylaten, Ameisensäure, Formaldehyd und Tocopherolen besteht, und wobei der Photokatalysator mindestens einen Stoff umfasst, der aus der Gruppe ausgewählt ist, welche aus Titanoxid, Zinkoxid, Tantaloxid und Fulleren besteht.

2. Elektrisch leitende Emulsionsdruckfarbe gemäß Anspruch 1, wobei die Ölphase mindestens ein nacht-wässriges Dispersionsmedium umfasst sowie Metallnanopartikel, die in dem Dispersionsmedium dispergiert sind, wobei es sich bei den Metallnanopartikeln um solche handelt, die durch ein Aminreduktionsverfahren erhalten wurden und mit einem Schutzmittel überzogen sind, welches eine geradkettige oder verzweigte Alkylgruppe mit 10 bis 20 Kohlenstoffatomen aufweist.

3. Elektrisch leitende Emulsionsdruckfarbe gemäß Anspruch 1, wobei das Reduktionsmittel mindestens einen Stoff aus der Gruppe umfasst, die aus Natriumborhydrid, Natriumhypochlorit, Ascorbinsäure, Ascorbaten, Citronensäure, Citraten, Äpfelsäure und Hydrazin besteht.

4. Elektrisch leitende Emulsionsdruckfarbe gemäß Anspruch 3, wobei die Konzentration des Reduktionsmittels in der Wasserphase 0,001 bis 1 mol/l beiträgt.

5. Elektrisch leitendes Emulsionsdruckfarbe gemäß Anspruch 1, wobei der Photokatalysator Titanoxid umfasst.

6. Elektrisch leitende Emulsionsdruckfarbe gemäß einem beliebigen der Ansprüche 1 bis 5, wobei die Ölphase und/oder die Wasserphase mindestens einen Stoff umfasst/umfassen, der aus der Gruppe ausgewählt ist, welche aus einer Polymerverbindung, einem wasserlöslichen Lösemittel und Ethylencarbonat besteht.

7. Verfahren zur Bildung eines elektrisch leitenden Dünnfilms, das einen Schritt umfasst, in welchem die elektrisch leitende Emulsionsdruckfarbe, die ein Reduktionsmittel gemäß einem beliebigen der Ansprüche 1 bis 6 enthält, als Schicht oder Muster aufgebracht wird, sowie einen Schritt, in welchem die elektrisch leitende Emulsionsdruckfarbe, die als Schicht oder Muster aufgebracht wurde, einer Wärmebehandlung unterzogen wird.

8. Verfahren zur Bildung eines elektrisch leitenden Dünnfilms gemäß Anspruch 7, wobei die Wärmebehandlung bei einer Temperatur von 40 bis 100 °C durchgeführt wird.

9. Verfahren zur Bildung eines elektrisch leitenden Dünnfilms, das einen Schritt umfasst, in welchem die elektrisch leitende Emulsionsdruckfarbe, die einen Photokatalysator gemäß einem beliebigen der Ansprüche 1 bis 6 enthält, als Schicht oder Muster aufgebracht wird, sowie einen Schritt, in welchem die elektrisch leitende Emulsionsdruckfarbe, die als Schicht oder Muster aufgebracht wurde, einer ultravioletten Bestrahlung unterzogen wird.

## Revendications

1. Encre électroconductrice en émulsion, comprenant une phase huileuse comprenant des nanoparticles métalliques et une phase aqueuse contenant un agent réducteur pour les nanoparticles métalliques et/ou un photocatalyseur, dans laquelle l'agent réducteur comprend au moins un agent réducteur sélectionné dans le groupe consistant en le borohydrure de sodium, l'hypochlorite de sodium, l'acide ascorbique, les ascorbates, les dérivés de l'acide ascorbique, l'acide citrique, les citrates, l'acide tartrique, les tartrates, l'acide malique, les composés d'hydrazine, le dioxyde de thiourée, les sulfoxylates, l'acide formique, le formaldéhyde et les tocophérols, et dans laquelle le photocatalyseur comprend au moins un photocatalyseur sélectionné dans le groupe consistant en l'oxyde de titane, l'oxyde de zinc, l'oxyde de tantale et le fullerène.

2. Encre électroconductrice en émulsion selon la revendication 1, dans laquelle la phase huileuse comprend au moins un milieu non aqueux de dispersion et des nanoparticules métalliques dispersées dans le milieu de dispersion, dans laquelle les nanoparticles métalliques sont des nanoparticles métalliques obtenues par une méthode de réduction d'amine et revêtues d'un agent protecteur ayant un groupe allyle linéaire ou ramifié contenant 10 à 20 atomes de carbone.

3. Encre électroconductrice en émulsion selon la revendication 1, dans laquelle l'agent réducteur comprend au moins un agent réducteur sélectionné dans le groupe consistant en le borohydrure de sodium, l'hypochlorite de sodium, l'acide ascorbique, les ascorbates, l'acide citrique, les citrates, l'acide malique et l'hydrazine.

4. Encre électroconductrice en émulsion selon la revendication 3, dans laquelle la concentration en agent réducteur dans la phase aqueuse est de 0,001 mole/l à 1 mole/l.

5. Encre électroconductrice en émulsion selon la revendication 1, dans laquelle le photocatalyseur comprend de l'oxyde de titane.

6. Encre électroconductrice en émulsion selon l'une quelconque des revendications 1 à 5, dans laquelle la phase huileuse et/ou la phase aqueuse comprennent au moins un élément sélectionné dans le groupe consistant en un composé polymère, un solvant hydrosoluble et le carbonate d'éthylène.

7. Méthode de formation d'une couche mince électro-conductrice, qui comprend une étape de revêtement ou d'impression de l'encre électro-conductrice en émulsion qui contient un agent réducteur selon l'une quelconque des revendications 1 à 6 et une étape de soumission de l'encre électroconductrice en émulsion revêtue ou imprimée à un traitement thermique.

8. Méthode de formation d'une couche mince électro-conductrice selon la revendication 7, le traitement thermique étant mené à une température allant de 40 °C à 100 °C.

9. Méthode de formation d'une couche mince électro-conductrice, qui comprend une étape de revêtement ou d'impression de l'encre électro-conductrice en émulsion qui contient un photocatalyseur selon l'une quelconque des revendications 1 à 6 et une étape de soumission de l'encre électroconductrice en émulsion revêtue ou imprimée à un rayonnement ultraviolet.
